# DEMANDE DE BREVET EUROPEEN

(11) **EP 1 209 412 A1**
(43) Date de publication de la demande: **29.05.2002**
(21) Numéro de dépôt: 01402914.4
(22) Date de dépôt: 13.11.2001
(51) Int. Cl.: F23C 7/02, F01K 23/10, F22B 1/18, F23C 6/04

(54) **Dispositif de postcombustion utilisant, comme comburant, des gaz de turbine ou de l'air frais**

(30) Priorité: 24.11.2000 FR 0015224
(71) Demandeur: ENTREPRISE GENERALE DE CHAUFFAGE INDUSTRIEL PILLARD, 13272 Marseille Cédex 08 (FR)
(72) Inventeur: Russo, Luigi, 13006 Marseille (FR); Pillard, Jean-Claude, 13008 Marseille (FR); Muscat, Patrick, 13600 La Ciotat (FR)
(74) Mandataire: Somnier, Jean-Louis

(57) **Abrégé**

Un dispositif de postcombustion (1) situé en aval d'une turbine (2) et en amont d'une chaudière (3) comprend une gaine principale (4) amenant les gaz de la turbine (2) à la chaudière (3), un ensemble brûleur (7) situé dans cette gaine (4) et une gaine (9), apte à apporter de l'air frais, débouchant dans la gaine principale (4) ; ce dispositif comprend, dans la gaine principale (4), un système (11) constitué d'au moins deux déflecteurs (12), chaque déflecteur (12) étant disposé dans un plan parallèle à la direction moyenne des gaz (DG) et perpendiculaire au plan de jonction (PJ) des deux gaines (4, 9) ; chaque déflecteur (12) possède une arête amont (13) située dans une position telle que chaque veine d'air (20) définie par les déflecteurs (12) est apte à recevoir de l'air frais en provenance de la gaine (9).

## Description

La présente invention a pour objet d'améliorer les dispositifs de postcombustion situés en aval d'une turbine et en amont d'une chaudière de récupération utilisant, comme carburant, des combustibles gazeux et/ou liquides, comme comburant, les gaz de la turbine ou de l'air frais lorsque celle-ci est à l'arrêt.

Les dispositifs de postcombustion classiques, situés en aval d'une turbine à gaz et en amont d'une chaudière de récupération, adaptés à fonctionner avec la turbine à gaz en marche ou à l'arrêt, comprennent une gaine principale, un ensemble brûleur situé dans la gaine principale, un système empêchant l'arrivée des gaz à l'ensemble brûleur quand le dispositif fonctionne en utilisant de l'air frais comme comburant, une gaine d'air frais débouchant dans la gaine principale entre l'ensemble brûleur et le système adapté à fermer l'arrivée des gaz et un ventilateur situé à l'entrée de la gaine d'air frais.

L'ensemble brûleur utilise, comme comburant, soit de l'air frais propulsé par le ventilateur, soit les gaz de la turbine qui ont une teneur en oxygène généralement comprise entre 11% et 15%, et, comme carburant, des combustibles liquides et/ou gazeux ; les gaz chauffés par l'ensemble brûleur sont envoyés dans la chaudière de récupération.

Ces systèmes permettent une augmentation du rendement et de la production de la chaudière de récupération lorsque l'on désire privilégier la production, par la chaudière, de vapeur ou d'eau chaude et, lorsqu'un intérêt économique se présente, la chaudière peut fonctionner la turbine à l'arrêt.

Ces systèmes sont souvent appelés systèmes de production d'énergie à cycle combiné ou systèmes de cogénération chaleur force.

Les systèmes connus ont l'inconvénient d'avoir un coût de fabrication élevé et de s'adapter difficilement à la structure et à l'emplacement des éléments qui constituent ou qui sont en relation avec ces dispositifs de postcombustion. De plus, la répartition de l'air frais à l'entrée de l'ensemble brûleur n'est pas très homogène, et en conséquence, celle de la température en entrée de la chaudière est irrégulière, ce qui diminue le rendement de celle-ci.

Le problème posé est ainsi, d'une part, d'améliorer la répartition de l'air à l'entrée de l'ensemble brûleur, la qualité de la distribution de la température à l'entrée de la chaudière, et, par voie de conséquence, les rendements de la chaudière, et, d'autre part, d'avoir un système permettant une telle répartition de l'air frais à l'entrée de l'ensemble brûleur qui soit simple et donc peu coûteux et qui puisse être adapté facilement à la structure et à l'emplacement des éléments constituants ou en relation avec ce dispositif de postcombustion.

Une solution au problème posé est un dispositif de postcombustion de combustibles gazeux et/ou liquides situé en aval d'une turbine à gaz et en amont d'une chaudière de récupération, adapté à fonctionner avec la turbine en marche ou à l'arrêt, et comprenant une gaine principale amenant les gaz de la turbine à la chaudière, un ensemble brûleur situé dans cette gaine principale et une gaine apte à apporter de l'air frais et débouchant dans la gaine principale ; selon l'invention, un tel dispositif comprend, dans la gaine principale, un système apte à répartir les débits et pressions de l'air frais à l'entrée de l'ensemble brûleur dans le plan de jonction de la gaine d'air frais à la gaine principale, constitué d'au moins deux déflecteurs, chaque déflecteur étant disposé dans un plan sensiblement parallèle à la direction moyenne des gaz en provenance de la turbine et sensiblement perpendiculaire au plan de jonction ; chaque déflecteur possédant une arête amont située dans la zone de jonction des deux gaines et dans une position telle que chaque veine d'air définie par les déflecteurs et les parois de la gaine principale est apte à recevoir de l'air frais en provenance de la gaine.

Pour cela, chaque arête amont des déflecteurs est décalée, par rapport à l'arête amont du (des) déflecteur(s) voisin(s), dans la direction moyenne des gaz, et disposée de telle façon que :
- l'ordre des déflecteurs du plus éloigné au plus proche de la gaine d'air frais, est le même que l'ordre, selon la direction moyenne des gaz, de la projection, sur la paroi de la gaine principale opposée à la gaine d'air frais, des arêtes amont des déflecteurs, selon la direction locale de l'air frais en sortie de la gaine d'air frais,
- ces projections étant comprises dans l'intervalle constitué, d'une part, par la projection, sur la paroi de la gaine principale opposée à la gaine d'air frais, de la paroi de la gaine d'air frais la plus proche de l'ensemble brûleur, selon la direction de cette paroi proche de l'ensemble brûleur, et, d'autre part, par la projection, sur cette paroi opposée à la gaine d'air frais, de la paroi de la gaine d'air frais la plus éloignée de l'ensemble brûleur, selon la direction de cette paroi éloignée de l'ensemble brûleur.

Suivant des modes de réalisation préférentiels, le dispositif de postcombustion comprend, dans la gaine d'air frais, un système apte à rendre homogène le champ de vitesse de l'air frais à la sortie de la gaine d'air frais qui comprend, selon le mode de réalisation, de un à trois ensembles de volets tels que :
- un premier ensemble de volets situés à proximité de la jonction de la gaine d'air frais à la gaine principale et placés les uns à coté des autres selon la direction normale au plan de jonction, chaque volet étant disposé dans un plan parallèle à la direction locale des gaz, l'ensemble des volets étant apte à redresser l'air frais en sortie de la gaine d'air frais selon un plan correspondant à la direction locale des gaz;
- un deuxième ensemble de volets situés à proximité du ventilateur générant l'air frais et placés les uns à coté des autres selon la direction normale au plan de jonction, l'ensemble des volets étant apte à repartir d'une manière homogène les vitesses de l'air frais en sortie de la gaine d'air frais selon la direction normale au plan de jonction;
- un troisième ensemble de volets situés à proximité du ventilateur et placés les uns à coté des autre selon la direction perpendiculaire à la direction moyenne de l'air frais et à la direction normale au plan de jonction, l'ensemble des volets étant apte à repartir d'une manière homogène les vitesses de l'air frais en sortie de la gaine d'air frais dans le plan de jonction.

Ce mode de réalisation particulier comprenant les trois ensembles de volets est adapté à homogénéiser le champ de vitesse de l'air frais à la sortie de la gaine d'air frais, notamment à le redresser selon un plan correspondant à la direction locale des gaz de la turbine, à le répartir d'une manière homogène selon la direction normale au plan de jonction et dans le plan de jonction, que la section de la gaine d'air frais soit constante ou non ou que le ventilateur propulse l'air dans une direction différente de celle de la gaine d'air.

Selon une autre réalisation avantageuse, l'ensemble brûleur comporte plusieurs injecteurs dont l'alimentation en combustible de chaque injecteur varie en fonction de sa situation verticale. Ce mode de réalisation particulier permet d'optimiser la répartition homogène de la température à l'entrée de la chaudière.

De tels dispositifs suivant l'invention répondent au problème posé en augmentant l'homogénéité de l'air frais à l'entrée de l'ensemble brûleur et ont l'avantage de s'adapter à toutes les positions de gaine d'air frais, à tous les angles de jonction de cette gaine à la gaine principale, à toutes les parties des parois de la gaine principale en amont de l'ensemble brûleur. De cette façon, un ventilateur et une gaine d'air peuvent être joints à une gaine principale de la façon la plus économique possible, en fonction notamment de la structure et de l'emplacement des différents éléments qui constituent et/ou qui sont en relation avec le dispositif de postcombustion.

On pourrait citer d'autres avantages de la présente invention mais ceux cités ci-dessus en montrent déjà suffisamment pour en prouver la nouveauté et l'intérêt. La description et les figures ci-après représentent des exemples de réalisation de l'invention mais n'ont aucun contenu limitatif : d'autres réalisations sont possibles dans le cadre de la portée et de l'étendue de cette invention en particulier comme rappelé ci-après en changeant le type d'ensemble brûleur utilisé.

La figure 1 représente une vue latérale d'un premier mode de réalisation d'un dispositif de postcombustion connu.

La figure 2 représente une vue latérale d'un deuxième mode de réalisation d'un dispositif de postcombustion connu.

La figure 3 représente une vue latérale d'un troisième mode de réalisation d'un dispositif de postcombustion connu.

La figure 4 représente une vue en perspective d'un exemple de jonction de la gaine d'air à la gaine principale selon un mode de réalisation.

La figure 5 représente une vue en coupe suivant VV' de la figure 4 d'un mode de réalisation du système suivant l'invention permettant de répartir les débits et pressions de l'air frais à l'entrée de l'ensemble brûleur.

La figure 6 représente une vue en coupe comme sur la figure 5 d'un mode de réalisation du système suivant l'invention permettant de répartir les débits et pressions de l'air frais à l'entrée de l'ensemble brûleur, avec un positionnement préféré des arêtes amont des déflecteurs constituant ce système.

La figure 7 représente une vue en coupe comme sur les figures 5 et 6 d'un mode de réalisation du système selon l'invention permettant de répartir les débits et pressions de l'air frais à l'entrée de l'ensemble brûleur.

La figure 8 représente un mode de réalisation du système de volets suivant l'invention permettant de rendre homogène le champ de vitesse de l'air frais en sortie de la gaine d'air frais.

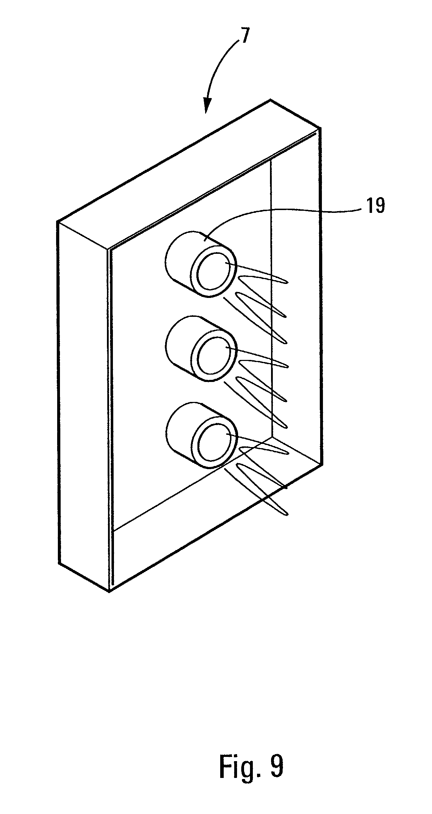

La figure 9 représente un exemple d'un ensemble brûleur muni de plusieurs injecteurs.

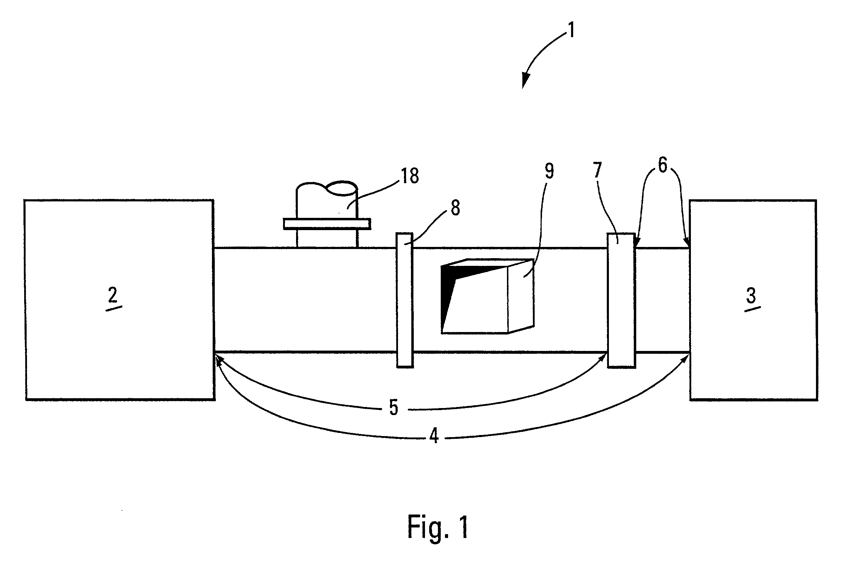

Comme on peut le voir sur les figures 1 à 3, un dispositif de postcombustion 1 est situé en aval d'une turbine à gaz 2 et en amont d'une chaudière de récupération 3. La sortie de la turbine 2 est raccordée à la chaudière 3 par une gaine principale 4 dans laquelle se situe un ensemble brûleur 7.

L'ensemble brûleur 7 peut comprendre, de façon connu, plusieurs têtes d'injecteurs ou plusieurs rampes de brûleur horizontales ou verticales.

Cette gaine principale 4 est constituée d'une gaine 5 des gaz de la turbine 2 et d'une gaine 6 de raccord à la chaudière 3. La gaine des gaz 5 est, de façon générale, rectiligne et de section constante pour éviter les pertes de charge et les changements de directions coûteux.

La gaine de raccord 6 peut être un simple prolongement de même section de la gaine des gaz 5, et, dans ce cas, l'ensemble brûleur 7 sert de jonction entre la gaine des gaz 5 et la gaine de raccord 6. (figure 1)

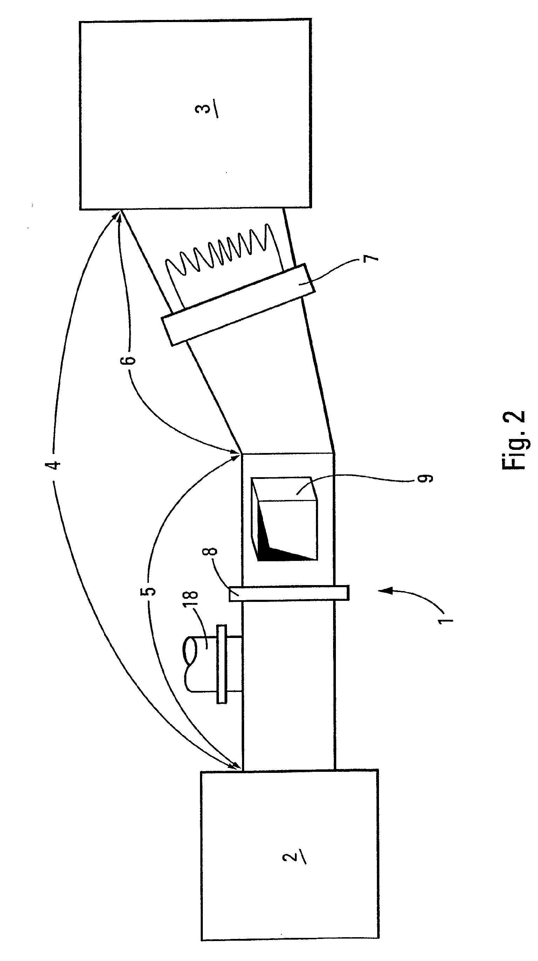

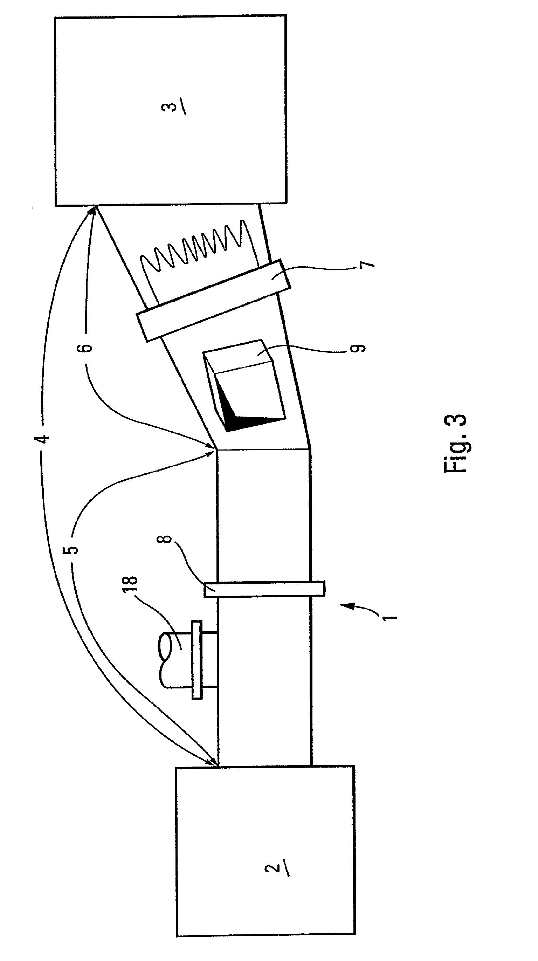

Il est aussi possible que la section de la gaine de raccord 6 à l'entrée de la chaudière 3 soit plus importante que la section de cette gaine 6 à sa jonction avec la gaine des gaz 5. Dans ce cas, les parois de la gaine de raccord sont inclinées les unes par rapport aux autres pour permettre une jonction correcte. Avec un tel type de gaine de raccord 6, faisant un angle non-plat avec la gaine des gaz 5, l'ensemble brûleur 7 est habituellement placé, non pas à la jonction de ces deux gaines 5 et 6, mais dans la gaine de raccord 6. De plus, l'ensemble brûleur 7 présente une inclinaison déterminée afin d'optimiser la régularité de la température des gaz à l'entrée de la chaudière 3. (figures 2 et 3)

Pour que le dispositif de postcombustion 1 puisse fonctionner quand la turbine 2 est à l'arrêt, il comporte un système d'alimentation en air frais ainsi qu'un système 8 empêchant l'arrivée des gaz de la turbine 2 à l'ensemble brûleur 7 quand l'air frais est utilisé comme comburant. La gaine des gaz 5 peut comporter une gaine d'évacuation 18, située en amont du système 8 pour évacuer, vers une sortie auxiliaire, les gaz de la turbine 2.

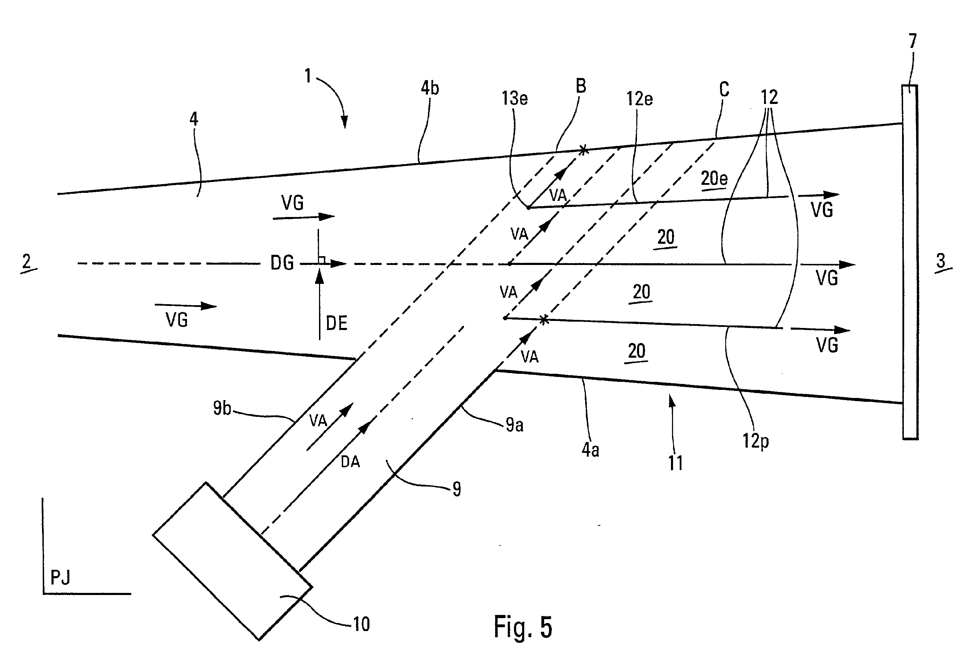

L'air frais, amené à la gaine principale 4 par une gaine 9, est produit par un ventilateur 10 situé dans cette gaine d'air frais 9, comme représenté à la figure 5.

La gaine d'air frais 9 débouche dans la gaine principale 4 en amont de l'ensemble brûleur 7. Elle peut déboucher soit dans la gaine des gaz 5 (figures 1 et 2), soit dans la gaine de raccord 6 si l'ensemble brûleur 7 se situe dans cette gaine de raccord 6 (figure 3).

Comme on peut le remarquer sur la figure 5, les filets des gaz de la turbine 2, en fonction de leur position dans la gaine principale 4, sont caractérisés par un vecteur vitesse VG qui correspond à leur direction locale. La direction moyenne des gaz DG dans cette gaine principale 4 correspond à l'axe de la gaine principale 4.

De manière analogue, les filets de l'air frais, en fonction de leur position dans la gaine d'air frais 9 et en sortie de cette gaine 9 sont caractérisés par un vecteur vitesse VA qui correspond à leur direction locale. La direction moyenne de l'air frais DA dans cette gaine d'air frais 9 et en sortie de cette gaine 9 correspond à l'axe de la gaine d'air frais 9.

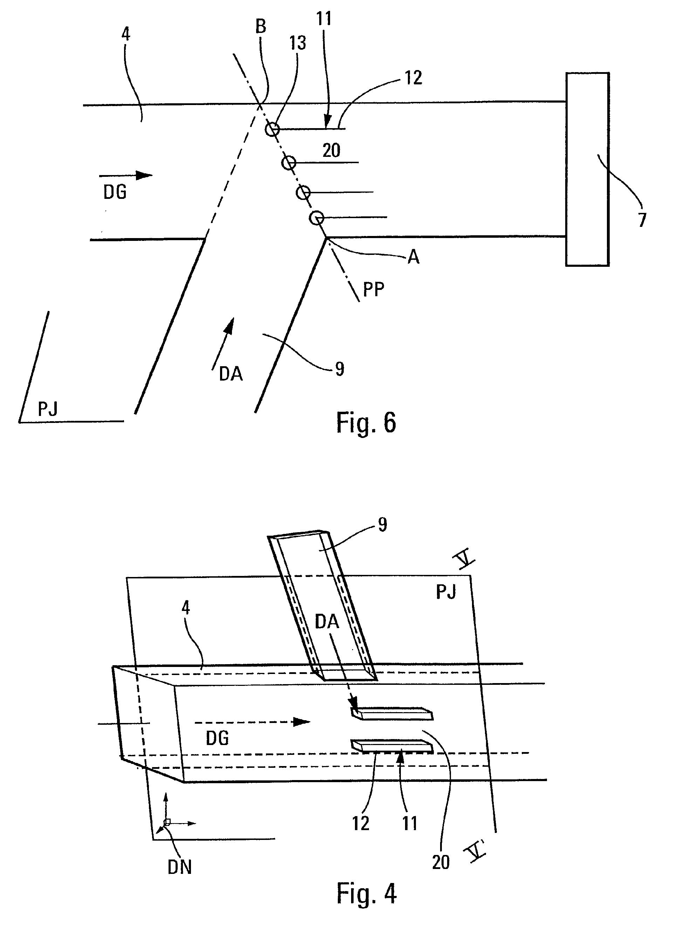

Comme indiqué sur la figure 4, à proximité de la jonction de la gaine d'air 9 à la gaine principale 4, la direction moyenne des gaz DG et la direction moyenne de l'air frais DA en sortie de la gaine d'air frais 9 définissent le plan de jonction PJ des deux gaines 4 et 9 (dans les figures 5, 6 et 7, le plan de jonction PJ est le plan de la feuille).

Ce plan de jonction PJ permet de définir la direction normale DN (qui lui est perpendiculaire). Cette direction normale DN est perpendiculaire à la direction moyenne des gaz DG et à la direction moyenne de l'air frais DA en sortie de la gaine d'air frais 9. La direction d'éloignement DE est définie comme étant à la fois perpendiculaire à la direction normale DN et à la direction moyenne des gaz DG. Cette direction d'éloignement DE sert de référence pour déterminer l'éloignement ou la proximité des éléments de la gaine principale 4 par rapport à la gaine d'air frais 9.

Dans la gaine principale 4, la paroi 4a est celle qui est adjacente à la gaine d'air frais 9, alors que la paroi 4b est celle qui y est opposée. De même, dans la gaine d'air frais 9, la paroi 9a est celle qui est la plus proche de l'ensemble brûleur 7, alors que la paroi 9b est celle qui en est la plus éloignée (figure 5).

Selon l'invention, un système 11 se trouve dans la gaine principale 4, à proximité de la jonction de la gaine d'air frais 9 à la gaine principale 4. Ce système 11 permet de répartir les débits et pressions de l'air frais à l'entrée de l'ensemble brûleur 7 quand le dispositif de postcombustion 1 utilise l'air frais comme comburant, sans perturber l'écoulement des gaz de la turbine 2 quand ces gaz sont utilisés comme comburant.

Comme on peut le voir à la figure 5, ce système 11 est constitué d'au moins deux déflecteurs 12. Chaque déflecteur 12 définit un plan qui est parallèle à la direction locale des gaz VG et qui est parallèle à la direction normale DN. Une telle orientation permet de ne pas perturber l'écoulement des gaz de la turbine 2 lorsque l'ensemble brûleur 7 utilise ces gaz comme comburant.

Chaque déflecteur 12 possède, dans la direction normale DN, une dimension telle qu'il recouvre l'ouverture faite dans la gaine principale 4 pour la jonction de la gaine d'air frais 9. De cette façon, l'air frais est dirigé par les déflecteurs 12.

Chaque déflecteur 12 possède une arête amont 13 délimitant le bord d'attaque du déflecteur recevant les gaz de la turbine 2 en premier.

Chaque arête amont 13 est disposée à proximité de la jonction de la gaine d'air frais 9 à la gaine principale 4 et est décalée par rapport à ses deux déflecteurs voisins 12 (ou par rapport à son seul déflecteur voisin dans le cas du déflecteur 12p le plus proche de la gaine d'air frais 9 et dans le cas du déflecteur 12e le plus éloigné de cette même gaine 9).

Chaque arête amont 13 est décalée de telle façon que le système 11 répartisse les débits et pressions entre les veines 20 délimitées par les déflecteurs 12 et les parois de la gaine principale 4.

La position du déflecteur 12p est telle que la projection de la paroi 9a, selon la direction de cette paroi 9a (qui correspond à la direction locale de l'air frais VA), se trouve à l'intérieur de ce déflecteur 12p.

De plus, chaque déflecteur 12, autre que le déflecteur 12e, est tel que la projection de son arête amont 13, selon la direction locale de l'air frais VA, se trouve à l'intérieur du déflecteur 12 qui est situé juste derrière lui par rapport à la direction d'éloignement DE.

Enfin, pour que la veine d'air 20e, délimitée par le déflecteur le plus éloigné 12e et la paroi 4b, reçoive une quantité d'air frais, il faut que la projection de son arête amont 13e, selon la direction locale de l'air frais VA, sur la paroi 4b, se trouve en aval, selon la direction moyenne des gaz DG, de la projection B de la paroi 9b, selon la direction de cette paroi 9b, sur la paroi 4b.

De cette façon, l'ordre des déflecteurs 12, du déflecteur 12e le plus éloigné au déflecteur 12p le plus proche, selon la direction d'éloignement DE, est le même que l'ordre, selon la direction moyenne des gaz DG, de la projection, sur la paroi 4b, des arêtes 13 des déflecteurs 12, selon la direction locale de l'air frais VA, ces projections étant situées entre la projection B et la projection C, sur la paroi 4b, de la paroi 9a, selon la direction de cette paroi 9a.

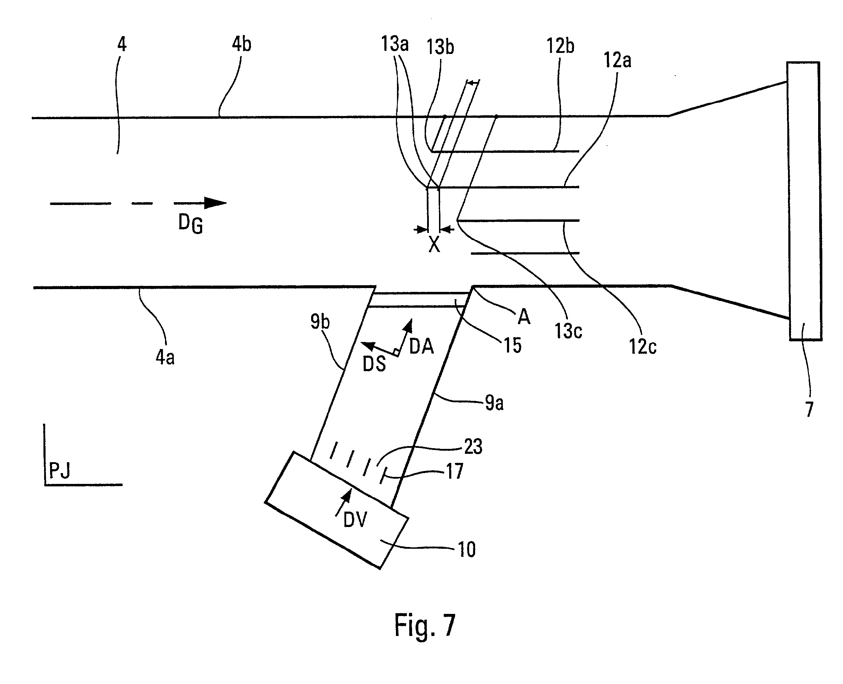

Selon un mode préféré de l'invention représenté à la figure 6, les arêtes amont 13 des déflecteurs 12 sont disposées sensiblement selon un plan de placement PP. Ce plan PP est défini d'une part, par l'arête A formée par la jonction de la paroi 9a à la paroi 4a, et, d'autre part, par la projection B.

Selon un mode préféré de l'invention, la position des arêtes amont 13 des déflecteurs 12 est ajustée par rapport au plan de positionnement PP afin de rendre sensiblement nuls les écarts de vitesse d'écoulement de l'air à l'intérieur de chaque veine d'air 20 délimitée par les déflecteurs 12 et les parois de la gaine principale 4.

Comme on peut le voir sur la figure 7, le déplacement des déflecteurs 12, les uns par rapport aux autres, permet en effet de modifier les débits et les vitesses de l'air dans chaque veine 20.

En déplaçant l'arête amont 13a d'un déflecteur 12a d'une certaine distance X, en direction amont par rapport à la direction moyenne des gaz DG, la projection, sur la paroi 4b, de cette arête 13a se rapproche de la projection, sur la paroi 4b, de l'arête 13b de son déflecteur voisin 12b qui est plus éloigné de la gaine d'air frais 9 (ou de la projection B si le déflecteur 12a est le déflecteur le plus éloigné 12e), et s'éloigne de la projection, sur la paroi 4b, de l'arête 13c de son autre déflecteur voisin 12c (ou de la projection C si le déflecteur 12a est le déflecteur le plus proche 12p). De cette façon, le débit et la vitesse de l'air frais dans la veine définie par les déflecteurs 12a et 12b (ou par le déflecteur 12e et la paroi 4b) diminuent proportionnellement avec la distance X, alors que le débit et la vitesse de l'air frais dans la veine définie par les déflecteurs 12a et 12c (ou par le déflecteur 12p et la paroi 4a) augmentent de façon proportionnelle avec cette distance X.

Les coefficients de proportionnalité, pour les deux veines, pour le débit et la vitesse de l'air, dépendent de la géométrie de la gaine principale 4.

En ajustant de cette façon la position relative de l'arête amont 13 de chaque déflecteur 12, il est possible de déterminer le débit et la vitesse de l'ai frais dans chaque veine définie par les déflecteurs 12 et les parois de la gaine principale 4 et ainsi d'alimenter de façon homogène l'ensemble brûleur 7 en air frais quand l'air est utilisé comme comburant.

Selon un mode avantageux de réalisation, chaque déflecteur 12 peut être composé de plusieurs panneaux coulissants les uns dans les autres. De cette façon, une fois les déflecteurs 12 placés conformément au résultat théorique, pour chaque déflecteur 12, le panneau coulissant situé le plus en amont par rapport à l'écoulement des gaz (le panneau comportant l'arête amont 13 du déflecteur 12) peut être coulissé par rapport au panneau aval du même déflecteur 12 de telle façon que la position de l'arête amont 13 corresponde à la position finale désirée par l'installateur. De cette façon l'ajustement de la position de l'arête amont 13 d'un déflecteur 12 peut se faire en modifiant la longueur du déflecteur 12 sans déplacer l'ensemble de ce déflecteur 12.

Selon un mode préféré de l'invention, le dispositif de postcombustion 1 est équipé d'un système 14 permettant de rendre homogène le champ de vitesse de l'air frais en sortie de la gaine d'air frais 9. Ce système permet donc de rendre plus efficace le système 11 utilisé pour répartir les débits et pressions de l'air frais à l'entrée de l'ensemble brûleur 7.

Ce système 14 est constitué d'au moins un ensemble de volets situés dans la gaine d'air frais 9.

Selon un modèle préféré, le système 14 permettant de rendre homogène le champ de vitesse de l'air frais en sortie de la gaine d'air frais 9 est constitué d'un ensemble de volets 15 situés dans la gaine d'air frais 9, à proximité de la jonction de cette gaine 9 avec la gaine principale 4. Ces volets 15 sont placés les uns à côté des autres selon la direction normale DN. Chacun de ces volets 15 définit un plan parallèle à la direction locale des gaz VG. De plus, ils sont répartis, à l'intérieur de cette gaine 9 de telle façon qu'ils définissent, entre eux et avec les parois de la gaine d'air frais 9, des veines d'air frais 21 ayant des sections de passage sensiblement égales.

De cette façon, ces volets 15 permettent de redresser l'air frais, en sortie de la gaine d'air frais 9, dans un plan sensiblement parallèle au plan de jonction PJ, corrigé par l'inclinaison plus ou moins importante de chaque volet 15 due à leur orientation selon la direction locale des gaz VG, c'est à dire dans des plans parallèles à chaque direction locale des gaz VG.

L'ensemble des volets 15 qui est adapté à redresser l'air frais en sortie de la gaine d'air frais 9 dans des plans parallèles à chaque direction des gaz VG peut, selon d'autres modes de réalisation, définir, avec les parois de la gaine d'air frais 9, des veines d'air frais 21 ayant des sections de passage différentes les unes des autres.

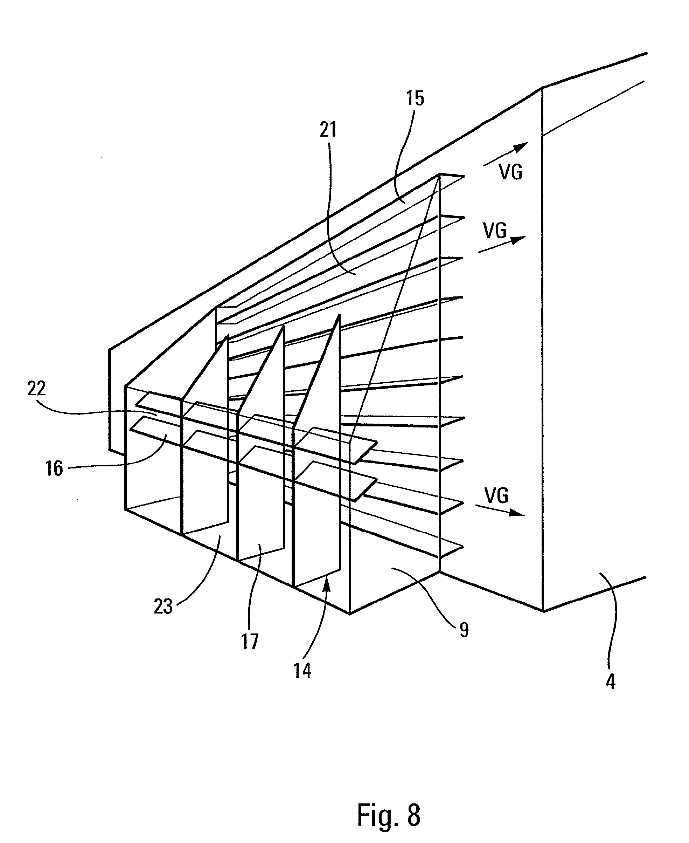

Selon un autre mode réalisation, le système 14 permettant de rendre homogène le champ de vitesse de l'air frais en sortie de la gaine d'air frais 9 est constitué d'un ensemble de volets 16 situés dans la gaine d'air frais 9, à proximité du ventilateur 10. Ces volets 16 sont placés les uns à côté des autres selon la direction normale DN. Chacun de ces volets 16 sont répartis, à l'intérieur de cette gaine 9 de telle façon qu'ils définissent, entre eux et avec les parois de la gaine d'air frais 9, des veines d'air frais 22 ayant des sections de passage sensiblement égales (à la figure 8, tous les volets 16 n'ont pas été représentés pour une raison de clarté).

De cette façon, les volets 16 permettent d'obtenir une répartition homogène, selon la direction normale DN, des vitesses de l'air frais en sortie de la gaine d'air frais 9.

L'ensemble des volets 16 qui est adapté à répartir de façon homogène les vitesses de l'air frais en sortie de la gaine d'air frais 9 selon la direction normale DN peut, selon d'autres modes de réalisation, définir avec les parois de la gaine d'air frais 9, des veines d'air frais 22 ayant des sections de passage différentes les unes des autres.

Selon un mode préféré, le système 14 permettant de rendre homogène le champ de vitesse de l'air frais en sortie de la gaine d'air frais 9 comprend les ensembles de volets 15 et 16.

Ce mode préféré avec les deux ensembles de volets 15 et 16 est particulièrement adapté lorsque la gaine d'air frais 9 a une section non constante, par exemple, lorsque sa section à sa jonction avec la gaine principale 4 est différente de celle à proximité du ventilateur 10.

Selon un mode préféré, le système 14 permettant de rendre homogène le champ de vitesse de l'air frais en sortie de la gaine d'air frais 9 comprend en ensemble de volets 17 situés dans la gaine d'air frais 9, à proximité du ventilateur 10. les volets 17 sont placés sont placés les uns à côte des autres, selon la direction secondaire DS perpendiculaire à la direction normale DN et à la direction moyenne de l'air frais DA dans la gaine d'air frais 9. Chacun de ces volets 17 sont répartis, à l'intérieur de cette gaine 9 de telle façon qu'ils définissent, entre eux et avec les parois de la gaine d'air frais 9, des veines d'air frais 23 ayant des sections de passage sensiblement égales.

De cette façon, les volets 17 permettent d'obtenir une répartition homogène des vitesses de l'air frais en sortie de la gaine d'air frais 9 dans des plans sensiblement parallèle au plan de jonction PJ.

L'ensemble des volets 17 qui est adapté à répartir de façon homogène les vitesses de l'air frais en sortie de la gaine d'air frais dans le plan de jonction PJ peut, selon d'autres modes de réalisation, définir avec les parois de la gaine d'air frais 9, des veines d'air frais 23 ayant des sections de passage différentes les unes de autres.

Le mode de réalisation du système 14 permettant de rendre homogène le champ de vitesse de l'air frais en sortie de la gaine d'air frais 9 comprenant l'ensemble de volets 17 couplé avec, soit l'ensemble de volets 15, soit l'ensemble de volets 16, est particulièrement adapté lorsque la direction moyenne de l'air frais DA à l'intérieur de la gaine d'air frais 9 est différente de la direction DV du ventilateur 10.

Le mode de réalisation du système 14 permettant de rendre homogène le champ de vitesse de l'air frais en sortie de la gaine d'air frais 9 comprenant les ensembles de volets 15, 16 et 17 est particulièrement adapté lorsque la direction moyenne de l'air frais DA à l'intérieur de la gaine d'air frais 9 est différente de la direction DV du ventilateur 10 et lorsque la gaine d'air frais 9 a une section non constante, par exemple, lorsque sa section à sa jonction avec la gaine principale 4 est différente avec celle à proximité du ventilateur 10.

De plus, selon un mode préféré de l'invention, l'ensemble brûleur 7 est muni d'injecteurs 19 dont l'alimentation en combustible dépend de la position de ces injecteurs 19 par rapport à la verticale. Cette alimentation en combustible est telle que, plus les injecteurs 19 sont situés en bas de l'ensemble brûleur 7 (par rapport à l'axe vertical terrestre), plus le débit en combustible est important. De cette manière, l'effet ascensionnel des gaz chauds produits par l'ensemble brûleur 7 est contré et la répartition de la température à l'entrée de la chaudière 3 est optimisée.

Le système 11 permettant de répartir les débits et pressions de l'air frais à l'entrée de l'ensemble brûleur 7 selon l'invention a l'avantage de ne pas perturber l'écoulement des gaz provenant de la turbine 2.

Il permet aussi de contrer l'effet de la force centrifuge du ventilateur 10 qui déséquilibre la répartition des vecteurs de vitesse de l'air frais.

Il permet aussi, grâce à la bonne répartition de l'air frais à l'entrée de l'ensemble brûleur 7, d'avoir une bonne homogénéité des gaz chauds produits par l'ensemble brûleur 7 et une répartition régulière de la température à l'entrée de la chaudière 3. De ce fait le rendement d'échange thermique de la chaudière 3 est amélioré.

Le dispositif de postcombustion 1 selon la présente invention peut être adapté à toutes les positions de gaine d'air frais 9, à tous les angles de jonction de la gaine d'air frais 9 à la gaine principale 4, à toutes les parties des parois de la gaine principale 4 (en amont de l'ensemble brûleur 7). De cette façon, un ventilateur 10 et une gaine d'air 9 peuvent être joints à une gaine principale 4 de la façon la plus économique possible, en fonction notamment de la structure et de l'emplacement des différents éléments qui constituent et/ou qui sont en relation avec le dispositif de postcombustion 1.

Grâce à l'emploi d'un dispositif de postcombustion 1 comprenant ce système 11 qui augmente l'homogénéité de l'air frais à l'entrée de l'ensemble brûleur 7, il est possible d'augmenter l'inclinaison des parois de la gaine de raccord 6 et de raccourcir la longueur de cette gaine 6, ce qui entraîne d'importantes économies de fabrication. Il est aussi possible d'optimiser l'inclinaison de l'ensemble brûleur 7.

Tous ces avantages procurés par le système 11 permettant de répartir les débits et pressions de l'air frais à l'entrée de l'ensemble brûleur 7 sont accrus lorsque le dispositif de postcombustion 1 comprend le système 14 permettant de rendre homogène le champ de vitesse de l'air frais en sortie de la gaine d'air frais 9 et/ou un ensemble brûleur 7 muni d'injecteurs 19 pouvant être alimentés en combustible de manière différentes selon leur positions dans cet ensemble brûleur 7.

La forme des différentes gaines, notamment celle de la gaine principale 4 et celle de la gaine d'air frais 9, les dimensions relatives des sections des veines d'air frais 21, 22 et 23, la structure de l'ensemble brûleur 7 et le type des injecteurs 19 ne se sont pas limités aux réalisations illustrées dans les figures jointes.

D'une façon générale, l'exemple décrit ci-dessus et les représentations faites sur le figures sont donnés de façon non limitative à titre d'illustration de l'invention.

## Revendications

1. Dispositif de postcombustion (1) de combustibles gazeux et/ou liquides situé en aval d'une turbine à gaz (2) et en amont d'une chaudière de récupération (3), adapté à fonctionner avec la turbine (2) en marche ou à l'arrêt, et comprenant une gaine principale (4) amenant les gaz de la turbine (2) à la chaudière (3), un ensemble brûleur (7) situé dans cette gaine principale (4) et une gaine (9) apte à apporter de l'air frais et débouchant dans la gaine principale (4), **caractérisé en ce qu'**il comprend, dans la gaine principale (4), un système (11) apte à répartir les débits et pressions de l'air frais à l'entrée de l'ensemble brûleur (7) dans le plan de jonction (PJ) de la gaine d'air frais (9) à la gaine principale (4), constitué d'au moins deux déflecteurs (12), chaque déflecteur (12) étant disposé dans un plan sensiblement parallèle à la direction moyenne des gaz (DG) en provenance de la turbine (2) et sensiblement perpendiculaire au plan de jonction (PJ), chaque déflecteur (12) possédant une arête amont (13) située dans la zone de jonction des deux gaines (4, 9) et dans une position telle que chaque veine d'air (20) définie par les déflecteurs (12) et les parois de la gaine principale (4) est apte à recevoir de l'air frais en provenance de la gaine (9).

2. Dispositif selon la revendication 1 **caractérisé en ce que** chaque déflecteur (12) a, dans la direction normale (DN) au plan de jonction (PJ), une dimension telle qu'il recouvre, l'ouverture de jonction des deux gaines (4, 9).

3. Dispositif selon la revendication 1 ou 2 **caractérisé en ce que** chaque arête amont (13) des déflecteurs (12) est décalée, par rapport à l'arête amont (13) du (des) déflecteur(s) voisin(s) (12), dans la direction moyenne des gaz (DG), et disposée de telle façon que
- l'ordre des déflecteurs (12) du plus éloigné (12e) au plus proche (12p) de la gaine d'air frais (9), est le même que l'ordre, selon la direction moyenne des gaz (DG), de la projection, sur la paroi (4b) de la gaine principale (4) opposée à la gaine d'air frais (9), des arêtes amont (13) des déflecteurs (12), selon la direction locale de l'air frais (VA) en sortie de la gaine d'air frais (9),
- ces projections étant comprises dans l'intervalle constitué, d'une part, par la projection (C), sur la paroi (4b) de la gaine principale (4) opposée à la gaine d'air frais (9), de la paroi (9a) de la gaine d'air frais (9) la plus proche de l'ensemble brûleur (7), selon la direction de cette paroi (9a) proche de l'ensemble brûleur (7), et, d'autre part, par la projection (B), sur cette paroi (4b) opposée à la gaine d'air frais (9), de la paroi (9b) de la gaine d'air frais (9) la plus éloignée de l'ensemble brûleur (7), selon la direction de cette paroi (9b) éloignée de l'ensemble brûleur (7).

4. Dispositif selon l'une des revendication 1 à 3, **caractérisé en ce que** les arêtes amont (13) des déflecteurs (12) sont disposées sensiblement selon un plan de positionnement (PP) délimité, d'une part, par l'arête (A) qui est formée par l'intersection de la paroi (9a) de la gaine d'air frais (9) proche de l'ensemble brûleur (7) et de la paroi (4a) de la gaine principale (4) adjacente à la gaine d'air frais (9), et, d'autre part, par la projection (B) de la paroi (9b) de la gaine d'air frais (9) éloignée de l'ensemble brûleur (7).

5. Dispositif selon l'une des revendications 1 à 4, **caractérisé en ce que** les déflecteurs (12) sont constitués de panneaux aptes à coulisser une fois les déflecteurs (12) mis en place dans la gaine principale (4) de telle façon que la position de l'arête amont (13) de chaque déflecteur (12) peut être ajustée en modifiant la longueur du déflecteur (12) sans déplacer l'ensemble du déflecteur (12).

6. Dispositif selon l'une des revendications 1 à 5, **caractérisé en ce qu'**il comprend, dans la gaine d'air frais (9), un système (14) apte à rendre homogène le champ de vitesse de l'air frais à la sortie de la gaine d'air frais (9) et comprenant au moins un ensemble de volets (15, 16) de même direction générale.

7. Dispositif selon la revendication 6, **caractérisé en ce que** le système (14) comprend un ensemble de volets (15) situés à proximité de la jonction des deux gaines (4, 9) et placés les uns à côté des autres selon la direction normale (DN) au plan de jonction (PJ), chaque volet (15) étant disposé dans un plan parallèle à la direction locale des gaz (VG), l'ensemble des volets (15) étant apte à redresser l'air frais en sortie de la gaine d'air frais (9) selon un plan correspondant à la direction locale des gaz (VG).

8. Dispositif selon la revendication 7, **caractérisé en ce que** les volets (15) définissent entre eux et avec les parois de la gaine d'air frais (9), des veines d'air frais (21) ayant des sections de passage sensiblement égales.

9. Dispositif selon l'une des revendications 6 à 8, **caractérisé en ce que** le système (14) comprend un ensemble de volets (16) situés à proximité d'un ventilateur (10) générant l'air frais et placés les uns à côté des autres selon la direction normale (DN) au plan de jonction (PJ), l'ensemble des volets (16) étant apte à répartir d'une manière homogène les vitesses de l'air frais en sortie de la gaine d'air frais (9) selon la direction normale (DN).

10. Dispositif selon la revendication 9 **caractérisé en ce que** les volets (16) définissent entre eux et avec les parois et la gaine d'air frais (9), des veines d'air frais (22) ayant des sections de passages sensiblement égales.

11. Dispositif selon l'une des revendications 7 à 10, **caractérisé en ce que** le système (14) comprend un ensemble de volets (17) situés à proximité du ventilateur (10) générant l'air frais et placés les uns à côté des autres selon la direction perpendiculaire à la direction normale (DN) et à la direction moyenne de l'air frais (DA), apte à répartir d'une manière homogène les vitesses de l'air frais en sortie de la gaine d'air frais (9) dans le plan de jonction (PJ).

12. Dispositif selon la revendication 11, **caractérisé en ce que** les volets (17) définissent entre eux et avec les parois de la gaine d'air frais (9), des veines d'air frais (23) ayant des sections de passage sensiblement égales.

13. Dispositif selon l'une des revendications 1 à 12, la gaine principale (4) étant constituée d'une gaine (5) apte à amener les gaz de la turbine (2) à l'ensemble brûleur (7) et d'une gaine de raccord (6) débouchant dans la chaudière (3), la gaine de raccord (6) possédant une section à l'entrée de la chaudière (3) plus grande et décalée par rapport à sa section à sa jonction avec la gaine des gaz (5), **caractérisé en ce que** la gaine d'air frais (9) débouche dans la gaine des gaz (5).

14. Dispositif selon l'une des revendications 1 à 12, la gaine principale (4) étant constituée d'une gaine (5) apte à amener les gaz de la turbine (2) à l'ensemble brûleur (7) et d'une gaine de raccord (6) débouchant dans la chaudière (3), la gaine de raccord (6) possédant une section à l'entrée de la chaudière (3) plus grande et décalée par rapport à sa section à sa jonction avec la gaine des gaz (5), **caractérisé en ce que** la gaine d'air frais (9) débouche dans la gaine de raccord (6).

15. Dispositif selon l'une des revendications 1 à 14, **caractérisé en ce que** l'ensemble brûleur (7) comporte plusieurs injecteurs (19) dont l'alimentation en combustible de chaque injecteur (19) varie en fonction de sa situation verticale.
